# EUROPEAN PATENT SPECIFICATION

(11) **EP 4 319 480 B1**
(45) Date of publication and mention of the grant of the patent: **28.10.2026**
(21) Application number: 23184992.8
(22) Date of filing: 12.07.2023
(51) Int. Cl.: H05B 1/02, A24F 40/53, A24F 40/57, A24F 40/10

(54) **RESISTANCE MEASUREMENT METHOD AND APPARATUS FOR ATOMIZER, ELECTRONIC ATOMIZATION DEVICE, AND STORAGE MEDIUM**
WIDERSTANDSMESSVERFAHREN UND -VORRICHTUNG FÜR ZERSTÄUBER, ELEKTRONISCHE ZERSTÄUBUNGSVORRICHTUNG UND SPEICHERMEDIUM
PROCÉDÉ ET APPAREIL DE MESURE DE RÉSISTANCE POUR ATOMISEUR, DISPOSITIF D'ATOMISATION ÉLECTRONIQUE ET SUPPORT D'INFORMATIONS

(30) Priority: 01.08.2022 CN 202210916583
(43) Date of publication of application: 07.02.2024
(73) Proprietor: Shenzhen Verdewell Technology Limited, Shenzhen, Guangdong 518102 (CN)
(72) Inventor: YUAN, Huakai, Shenzhen 518102 (CN); DU, Pengfei, Shenzhen 518102 (CN)
(74) Representative: Michalski Hüttermann & Partner mbB

(56) References cited:
- CN-A- 109 619 688
- JP-A- 2021 052 799
- US-A1- 2022 183 384

## Description

### TECHNICAL FIELD

The present invention relates to the field of atomization devices, and particularly to a resistance measurement method and apparatus for an atomizer, an electronic atomization device, and a storage medium.

### BACKGROUND

The temperature coefficient of resistance (TCR) represents a relative change in a resistance value of a resistor when the temperature changes by 1 degree Celsius. After an initial temperature, an initial resistance value, and a current resistance value are acquired, a current temperature may be calculated according to the TCR, which is beneficial for the atomization device to control the temperature. Therefore, identification of the initial resistance value and the initial temperature of the atomizer is very important in the solution using the TCR.

Currently, in the electronic atomization device, during the identification of the initial resistance value of the atomizer, the atomizer may generate a contact resistance during contact, resulting in a certain deviation in the identification of the initial resistance value.

The document JP 2021052799A discloses an aerosol generation system including an electric heater equipped with at least one heater element for heating an aerosol forming substrate, a power source, and an electric circuit connected to the electric heater and the power source, which includes a memory. The electric circuit is configured so as to determine a harmful state when a ratio of an initial electric resistance of the heater to a change in an electric resistance from the initial resistance is larger than a maximum threshold stored in the memory, or smaller than a minimum threshold, and, when there is a harmful state, limit the power supplied to the electric heater or supply a display to a user.

The document US 2022/183384A1 discloses a vapor provision system comprising: a heating element for generating a vapor from a vapor precursor material; and control circuitry configured to provide power for the heating element for performing a heating operation to generate the vapor and to compare a measurement of a resistance value for the heating element for the heating operation with a baseline resistance value for the heating element for use in detecting a fault condition. The control circuitry is further configured to: establish the baseline resistance value for a first heating operation by making a measurement of a first resistance value for the heating element; and establish the baseline resistance value for a second, subsequent, heating operation by making a measurement of a second resistance value for the heating element if more than a predetermined period of time has elapsed between the first heating operation and the second heating operation, and otherwise using the same baseline resistance value as for the first heating operation.

The document CN 109619688A discloses a power supply device with temperature control and an electronic cigarette, wherein the power supply device comprises a shell, a battery arranged in the shell, an electric connection assembly arranged at the first end of the shell, a temperature control plate and airflow sensor arranged in the shell, and a lamp cap arranged on the second end of the shell; the lamp cap is provided with an airflow inlet communicated with the inside of the shell; the electric connection assembly and the airflow sensor are both electrically connected with the temperature control plate, and the temperature control plate is electrically connected with the battery.

### SUMMARY

Based on this, in view of the above technical problems, it is necessary to provide a resistance measurement method and apparatus for an atomizer, an electronic atomization device, and a storage medium that can improve the accuracy of measurement of an initial resistance value of the atomizer.

According to a first aspect, this application provides a resistance measurement method for an atomizer. The method includes:
reading a resistance value of the atomizer at intervals of first preset time and obtaining a first preset number of first resistance values;
starting the atomizer and continuing for second preset time;
stopping the atomizer before reading for the second time the resistance value, reading the resistance value of the atomizer at intervals of third preset time and obtaining a second preset number of second resistance values; and
calculating an average value of the first resistance values and the second resistance values as an initial resistance value of the atomizer.

In an embodiment, the method includes:
before starting the atomizer and continuing for the second preset time
determining a fluctuation range of the first resistance values; and
when the fluctuation range of the first resistance values is within a preset fluctuation range, starting the atomizer and continuing for the second preset time; and
when the fluctuation range of the first resistance values is not within the preset fluctuation range, determining a state of the atomizer as abnormal and generating corresponding alarm information.

In an embodiment, determining the fluctuation range of the first resistance values includes:
calculating a difference value between adjacent first resistance values and obtaining a plurality of difference values; and
calculating the fluctuation range of the first resistance values according to the plurality of difference values.

In an embodiment, the method includes: after starting the atomizer and continuing for the second preset time and before reading the resistance value of the atomizer at intervals of the third preset time and obtaining the second preset number of second resistance values,
reading the resistance value of the atomizer and obtaining a third resistance value; and
when the third resistance value is within a preset resistance range, reading the resistance value of the atomizer at intervals of the third preset time and obtaining the second preset number of second resistance values; and
generating corresponding alarm information when the third resistance value is not within the preset resistance range.

In an embodiment, the method includes: before calculating the average value of the first resistance values and the second resistance values as the initial resistance value of the atomizer,
determining an average value of the first resistance values and an average value of the second resistance values; and
when a difference value between the average value of the first resistance values and the average value of the second resistance values is within a preset difference range, calculating the average value of the first resistance values and the second resistance values as the initial resistance value of the atomizer; and
generating corresponding alarm information when the difference value between the average value of the first resistance values and the average value of the second resistance values is not within the preset difference range.

In an embodiment, the method includes: before reading the resistance value of the atomizer at intervals of the first preset time and obtaining the first preset number of first resistance values,
detecting a port level of a processor in an electronic atomization device to which the atomizer is connected; and
when the port level of the processor is detected to drop, reading the resistance value of the atomizer at intervals of the first preset time and obtaining the first preset number of first resistance values.

In an embodiment, the method further includes:
acquiring a current ambient temperature through an ambient temperature sensor; and
calibrating a temperature parameter in a reference temperature resistance parameter of the atomizer as the current ambient temperature.

According to a second aspect, this application further provides a resistance measurement apparatus for an atomizer, including:
a first resistance value acquisition module, configured to read a resistance value of the atomizer at intervals of first preset time and obtain a first preset number of first resistance values;
an atomizer starting module, configured to start the atomizer and continue for second preset time and stop the atomizer before reading for the second time the resistance value;
a second resistance value acquisition module, configured to read the resistance value of the atomizer at intervals of third preset time and obtain a second preset number of second resistance values; and
a calculation module, configured to calculate an average value of the first resistance values and the second resistance values as an initial resistance value of the atomizer.

According to a third aspect, this application further provides an electronic atomization device, including a processor and a memory for storing a computer program, and the processor, when executing the computer program, implements the following steps of:
reading a resistance value of the atomizer at intervals of first preset time and obtaining a first preset number of first resistance values;
starting the atomizer and continuing for second preset time; and
reading the resistance value of the atomizer at intervals of third preset time and obtaining a second preset number of second resistance values; and
calculating an average value of the first resistance values and the second resistance values as an initial resistance value of the atomizer.
According to a fourth aspect, this application further provides a computer-readable storage medium, on which a computer program is stored. The computer program, when executed by a processor, causing the processor to implement the following steps of:
reading a resistance value of the atomizer at intervals of first preset time and obtaining a first preset number of first resistance values;
starting the atomizer and continuing for second preset time;
reading the resistance value of the atomizer at intervals of third preset time and obtaining a second preset number of second resistance values; and
calculating an average value of the first resistance values and the second resistance values as an initial resistance value of the atomizer.

According to the resistance measurement method and apparatus for the atomizer, the electronic atomization device, and the storage medium, a resistance value of the atomizer is read at intervals of first preset time and a first preset number of first resistance values re obtained; the atomizer is started and continued for second preset time; the resistance value of the atomizer is read at intervals of third preset time a second preset number of second resistance values are obtained; and an average value of the first resistance values and the second resistance values is calculated as an initial resistance value of the atomizer. In such a manner, in the present application, the first resistance value of the atomizer is acquired for a plurality of times, and the atomizer is started and continued for the second preset time, and the second resistance value of the atomizer is acquired for a plurality of times. Finally, the average value of the first resistance values and the second resistance values is calculated as the initial resistance value of the atomizer, With the mode of reading the resistance value a plurality of times and then taking the average value, the accuracy of the result is guaranteed, and at the same time the contact resistance generated by the atomizer during contact is avoided. Therefore, the accuracy of the initial resistance measurement of the atomizer is improved.

### BRIEF DESCRIPTION OF THE DRAWINGS

FIG. 1 is a schematic flow chart of a resistance measurement method for an atomizer according to an embodiment I.
FIG. 2 is a schematic flow chart of a resistance measurement method for an atomizer according to an embodiment II.
FIG. 3 is a schematic flow chart of a resistance measurement method for an atomizer according to an embodiment III.
FIG. 4 is a schematic flow chart of a resistance measurement method for an atomizer according to an embodiment IV.
FIG. 5 is a schematic flow chart of a resistance measurement method for an atomizer according to an embodiment V.
FIG. 6 is a schematic flowchart of a resistance measurement method for an atomizer according to an embodiment VI.
FIG. 7 is a schematic diagram illustrating a resistance change curve of an atomizer according to an embodiment.
FIG. 8 is a schematic diagram illustrating a module structure of a resistance measurement apparatus for an atomizer according to an embodiment.

### DETAILED DESCRIPTION

In order to make the purpose, technical solution, and advantages of the present application clearer, the application will be further described in detail with reference to the accompanying drawings and the embodiments. It should be appreciated that the specific embodiments described herein are only used for explaining the application, rather than limiting the present application.

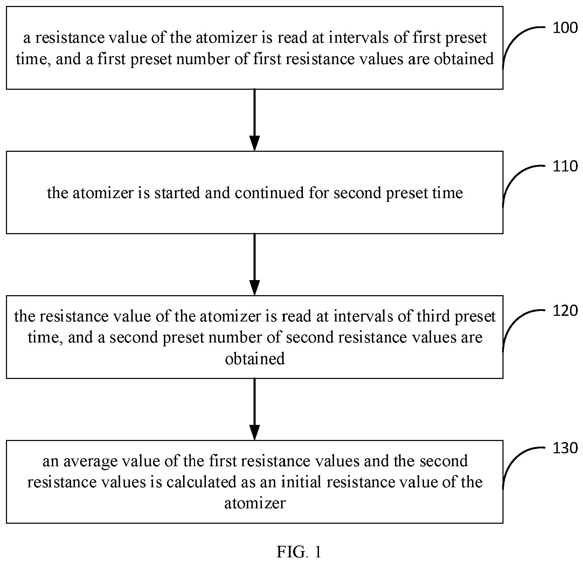

In an embodiment, as shown in FIG. 1, a resistance measurement method for an atomizer is provided, which includes the following steps.

Step 100: a resistance value of the atomizer is read at intervals of first preset time, and a first preset number of first resistance values are obtained.

The method described in the application may be applied to an electronic atomization device, and may also be applied to other devices for measuring a resistance value of an atomizer.

Specifically, when the resistance value of the atomizer is measured, the atomizer may be connected to the electronic atomization device or other measurement devices. Then, the resistance value of the atomizer is read at intervals of first preset time to obtain a corresponding first preset number of resistance values. For convenience of description, the resistance value obtained in this step is defined as a first resistance value. The first preset time may be any time ranged from 0.1 seconds to 1 second. For example, the resistance value of the atomizer is read at intervals of 0.5 seconds. In order to ensure the accuracy of the result, the first preset number is a natural number greater than or equal to 2.

Step 110: the atomizer is started and continued for second preset time.

The atomizer is started and caused to operate normally for the second preset time. The second preset time may be any time ranged from 0.3 seconds to 1 second. Since the second preset time is shorter, in a normal state (the atomizer is arranged to operate normally in an atomization liquid), a starting time of the atomizer is short, and the resistance value thereof does not change much. In a specific implementation, other time may be used as the second preset time. It should be appreciated that the second preset time should not be excessively long. If the starting time of the atomizer is excessively long, the temperature of the atomizer is higher. After the atomizer is cooled, the resistance value measurement process of the atomizer needs to be performed again. In the present application, the atomizer is started for the second preset time, the state of the atomizer may change, whether the TCR of the atomizer is normal is confirmed, which may also lay the foundation for the subsequent accurate measurement.

Step 120: the resistance value of the atomizer is read at intervals of third preset time, and a second preset number of second resistance values are obtained.

After the atomizer continues to operate for the second preset time, the resistance value of the atomizer is read at intervals of third preset time to obtain the corresponding second preset number of resistance values. For convenience of description, the resistance value obtained in this step is defined as a second resistance value. The third preset time may be or may not be the same as the first preset time, which is not limited here. Similarly, the second preset number and the first preset number may also be the same, and may also be different in a specific embodiment, which are not limited here.

It should be appreciated that the first preset number and the second preset number may be both 1. If the first preset number and the second preset number are both 1, the accuracy of the result is reduced. However, compared to the manner in the existing technique (the resistance value of the atomizer is directly read as the initial resistance value of the atomizer when connecting to the atomizer), the accuracy is also improved.

Step 130: an average value of the first resistance values and the second resistance values is calculated as an initial resistance value of the atomizer.

After a plurality of first resistance values and a plurality of second resistance values are obtained, an average value of the plurality of first resistance values and the plurality of second resistance values is calculated, and the calculated average value serves as the initial resistance value of the atomizer.

According to the above-mentioned resistance measurement method for the atomizer, the resistance value of the atomizer is read at intervals of first preset time to obtain a first preset number of first resistance values; the atomizer is started and continued for second preset time; the resistance value of the atomizer is read at intervals of third preset time to obtain a second preset number of second resistance values; and an average of the first resistance values and the second resistance values is calculated as an initial resistance value of the atomizer. In this way, the first resistance values of the atomizer are acquired for a plurality of times, and the atomizer is started and continued for the second preset time, and the second resistance values of the atomizer are acquired for a plurality of times; finally, the average value of the first resistance values and the second resistance values is calculated as the initial resistance value of the atomizer. By reading the resistance values a plurality of times and then calculating the average value, the accuracy of the result is ensured, and meanwhile the contact resistance generated by the atomizer during contact is avoided. Accordingly, the accuracy of the initial resistance measurement of the atomizer is improved.

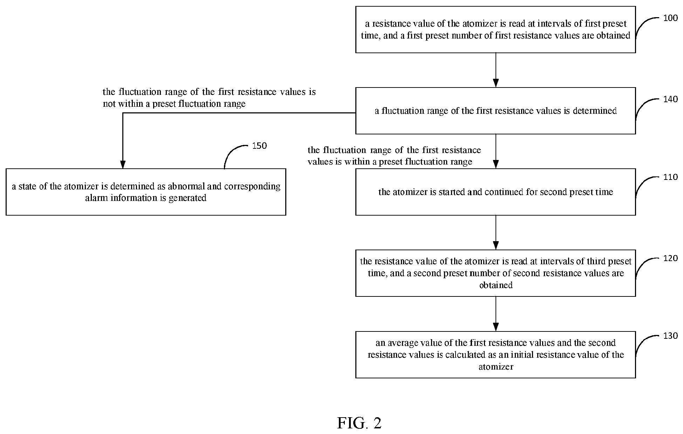

In an embodiment, as shown in FIG. 2, the resistance measurement method for the atomizer may further include the following steps.

Step 140: a fluctuation range of the first resistance values is determined.

When the fluctuation range of the first resistance values is within a preset fluctuation range, the Step 110 is performed, i.e., the atomizer is started and continued for a second preset time.

Step 150: a state of the atomizer is determined as abnormal and corresponding alarm information is generated.

In this embodiment, in order to improve the accuracy of the resistance measurement result, after a plurality of first resistance values are obtained, a fluctuation range of the first resistance value is determined according to the obtained plurality of first resistance values. If the fluctuation range of the first resistance value is within the preset fluctuation range, it is considered that the state of the atomizer is normal, and the step 110 is continued. If the fluctuation range of the first resistance value is not within the preset fluctuation range, it is determined that the state of the atomizer is abnormal (the abnormal state includes dry burning of the atomizer, TCR exceeding the range, and so on). If the state of the atomizer is abnormal, there definitely exists a problem in the measured resistance value. In this case, the corresponding alarm information is generated. The electronic atomization device can control an abnormal state display light to display according to the alarm information, in order to remind a user or display the alarm information on a display in the electronic atomization device to remind the user. In this embodiment, the preset fluctuation range is [-10%, 10%]. After the state of the atomizer is determined as abnormal, a period of time (30 seconds to 60 seconds for an example) may be waited and then this step is performed again. That is to say, the resistance value of the atomizer is read at intervals of first preset time to reacquire a plurality of first resistance values.

In an embodiment, the step of determining the fluctuation range of the first resistance value includes:
a difference value between adjacent first resistance values is calculated, and a plurality of difference values are obtained; and
the fluctuation range of the first resistance value is calculated according to the plurality of difference values.

Specifically, in the embodiment, the process of determining the fluctuation range of the first resistance value includes: the difference value between adjacent first resistance values is calculated, and a plurality of difference values are obtained, and the fluctuation range of the first resistance value is calculated according to the obtained plurality of difference values. It should be noted that the number of the first resistance values in the embodiment is a natural number greater than or equal to 3. When the number of the first resistance values is greater than or equal to 3, the plurality of difference values can be obtained. For example, the number of the first resistance values is 4, which are respectively R₁, R₂, R₃, and R₄. R₂-R₁=R₂₁, R₃-R₂=R₃₂, R₄-R₃=R₄₃, and then the fluctuation range of the first resistance value is calculated according to R₂₁, R₃₂, and R₄₃. The fluctuation of the first resistance value may be calculated by using the following formula: R₂₁/R₁, R₃₂/R₂, and R₄₃/R₃. The fluctuation range of the first resistance value is determined according to the calculated fluctuation. For example, R₂₁/R₁ = 5%, R₃₂/R₂ = -5%, and R₄₃/R₃ = 6%, and the fluctuation range of the first resistance value is [-5%, 6%]. During the specific implementation, the fluctuation range of the first resistance value may further be determined in other manners. For example, the calculated plurality of difference values form a graph, the fluctuation range of the first resistance value is determined through the graph, and then it is determined whether the fluctuation range of the first resistance value is within the preset range.

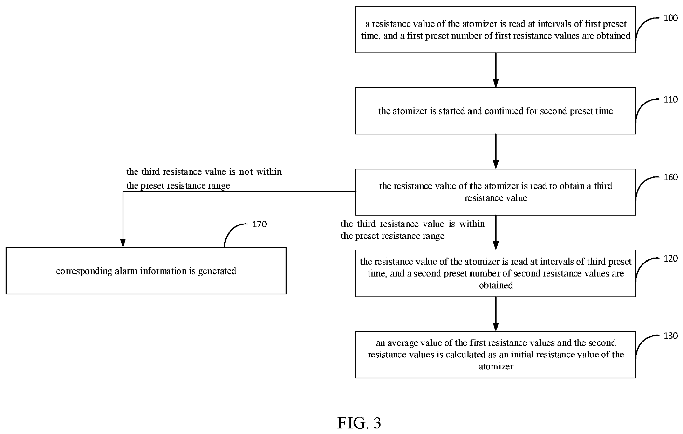

In an embodiment, as shown in FIG. 3, the resistance measurement method for the atomizer may further include the following steps.

Step 160: the resistance value of the atomizer is read to obtain a third resistance value.

If the third resistance value is within the preset resistance range, the step 120 is performed, i.e., the resistance value of the atomizer is read at intervals of third preset time, and a second preset number of second resistance values are obtained.

Step 170: corresponding alarm information is generated.

Specifically, in the embodiment, after the atomizer is started and before the second resistance value of the atomizer is acquired, the resistance value of the atomizer is further read to obtain the resistance value of the atomizer after the atomizer continues to operate for the second preset time, which is defined as the third resistance value. After the third resistance value of the atomizer is obtained, it is determined whether the third resistance value is within the preset resistance range. Generally, because of a short operating time of the atomizer, if the atomizer is normally immersed in oil (an atomization liquid), the atomizer can operate normally, and the resistance value does not change much (exemplarily, the atomizer operates for 0.3 seconds to 1 second, and the resistance value changes to increase by 20 milliohms to 50 milliohms). Therefore, the preset resistance range of the atomizer is necessarily to be set according to experiences, and then whether the obtained third resistance value is within the preset resistance range is determined, to determine whether the atomizer can operate normally. Exemplarily, the preset resistance range is [0.5 Ω, 2 Ω]. The step 120 is performed if the third resistance is within the preset resistance range, i.e., the resistance value of the atomizer is read at intervals of third preset time, and a second preset number of second resistance values are obtained.

If the third resistance is not within the preset resistance range, it means that the atomizer cannot operate normally (for example, the abnormal operating state of the dry burning of the atomizer due to an absence of the atomization liquid). In this case, the corresponding alarm information is generated, to prompt the user and exit the initial resistance value measurement process of the atomizer.

It should be noted that the alarm information generated in the step 170 and step 150 may be the same or different. Exemplarily, if the electronic atomization device uses an indicator light to display the alarm information, the alarm information generated in the step 170 and step 150 is the same; and if the electronic atomization device uses the display screen to display the alarm information, the alarm information generated in the step 170 and step 150 may be different, so that the user can distinguish a specific situation of the alarm. For example, the alarm information generated in the step 170 is that the resistance of the atomizer changes too much after the atomizer continuously operates for 1 second. The alarm information generated in the step 150 is that the read value of the atomizer fluctuates greatly after the atomizer is connected to. It should be appreciated that if the electronic atomization device uses the indicator light to display the alarm information, the alarm information generated in the step 170 and step 150 may also be different. The alarm information is different, and a display frequency/color of the indicator light is different.

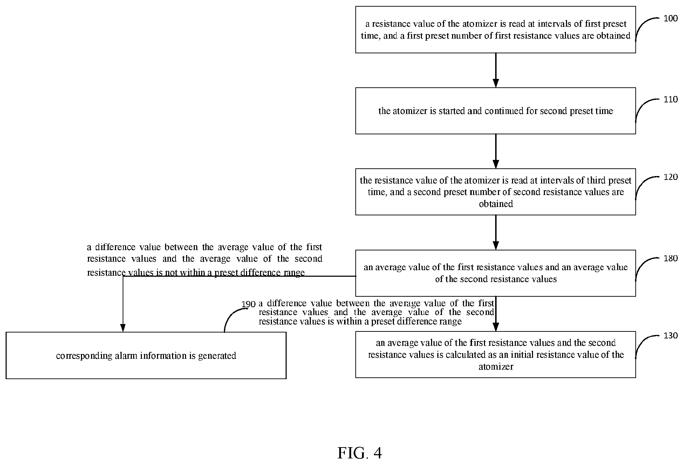

In an embodiment, as shown in FIG. 4, the resistance measurement method for the atomizer may further include the following steps.

Step 180: an average value of the first resistance values and an average value of the second resistance values.

If a difference value between the average value of the first resistance values and the average value of the second resistance values is within a preset difference range, the step 130 is performed, i.e., an average value of the first resistance values and the second resistance values is calculated as the initial resistance value of the atomizer.

Step 190: corresponding alarm information is generated.

Specifically, in the embodiment, after a plurality of second resistance values are obtained, the average value of the first resistance values and the average value of the second resistance values are calculated respectively. A difference range between the two average values is determined according to the average value of the first resistance values and the average value of the second resistance values. Then, whether the atomizer is in reliable contact is determined according to whether the difference range of the two average values is within the preset difference range. If the difference range between the two average values is within the preset difference range, it means that the atomizer is in reliable contact, and the step 130 is performed, i.e., an average value of the first resistance values and the second resistance values is calculated as the initial resistance value of the atomizer. If the difference range between the two average values is not within the preset difference range, it means that the atomizer is not in reliable contact, and the corresponding alarm information is generated in this case. The step of determining the difference range between the two average values according to the average value of the first resistance values and the average value of the second resistance values may specifically include: a difference value between the average value of the first resistance values and the average value of the second resistance values is calculated, a ratio of the difference value to the average value of the first resistance values is calculated, and the ratio is compared to the preset difference range. Exemplarily, the preset difference range is [-10%, 10%].

It should be noted that the alarm information generated in the step 190 and step 150 may be the same or different. Exemplarily, if the electronic atomization device uses an indicator light to display the alarm information, the alarm information generated in the step 190 and step 150 is the same; and if the electronic atomization device uses the display screen to display the alarm information, the alarm information generated in the step 190 and step 150 may be different, so that the user can distinguish a specific situation of the alarm. For example, the alarm information generated in the step 190 is that the atomizer is not in reliable contact; and the alarm information generated in that step 150 is that the read value of the atomizer fluctuates greatly after the atomizer is connected. It should be appreciated that if the electronic atomization device uses the indicator light to display the alarm information, the alarm information generated in the step 190 and step 150 may also be different. The alarm information is different, and a display frequency/color of the indicator light is different.

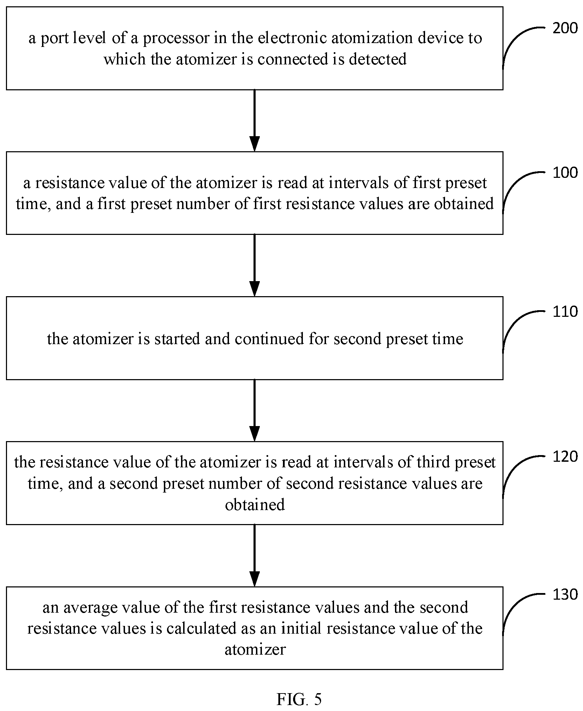

In an embodiment, as shown in FIG. 5, the resistance measurement method for the atomizer may further include the following steps.

Step 200: a port level of a processor in the electronic atomization device to which the atomizer is connected is detected.

If it is detected that the port level of the processor drops, the step 100 is performed, i.e., the resistance value of the atomizer is read at intervals of first preset time, and a first preset number of first resistance values are obtained.

Specifically, before the process of starting the resistance measurement of the atomizer, as an embodiment of the present disclosure, the port level of the processor in the electronic atomization device to which the atomizer is connected is detected; if a falling edge appears on the port level of the processor, it means that the atomizer is connected. In this case, the processor is woken up or triggered to start the process of measuring the resistance of the atomizer, that is, the step 100 starts to be performed. In a specific embodiment, the processor can also be triggered by a physical button (exemplarily, the physical button may be a reset button or a power button) in the electronic atomization device to start the process of measuring the resistance of the atomizer.

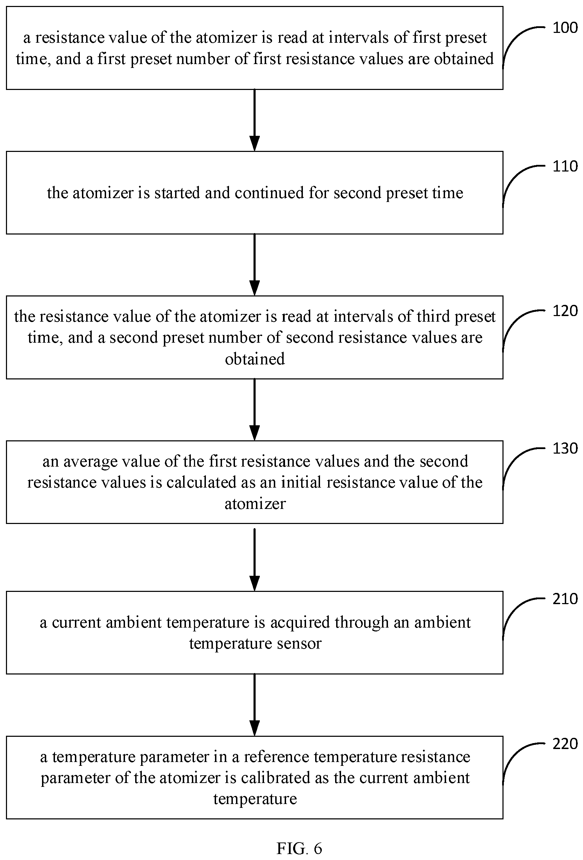

In an embodiment, as shown in FIG. 6, the resistance measurement method for the atomizer may further include the following steps.

Step 210: a current ambient temperature is acquired through an ambient temperature sensor.

Step 220: a temperature parameter in a reference temperature resistance parameter of the atomizer is calibrated as the current ambient temperature.

Specifically, the above steps of measuring the resistance value of the atomizer is intended to deduce the temperature of the atomizer according to the TCR, so as to facilitate the control of the electronic atomization device. However, an initial temperature of the atomizer is usually set at a room temperature (25°) in the existing technique. The location of the electronic atomization device may be anywhere in the world, that is, the ambient temperature of the atomizer may be -30°, -10°, 0°, 40°, and so on. The initial temperature of the atomizer is set to 25 °, which is obviously not conducive to the control of the electronic atomization device. Therefore, in the embodiment, after completing the measurement of the resistance of the atomizer, that is, after the initial resistance value of the atomizer is obtained, the current ambient temperature is further acquired through the ambient temperature sensor arranged in the electronic atomization device as the initial temperature of the electronic atomization device to complete the calibration of the temperature parameter.

In an embodiment, the resistance measurement method for the atomizer may include: the port level of the processor in the electronic atomization device is detected; when a falling edge is detected in the port level of the processor, it means that the atomizer is connected; in this case, the processor is woken up or triggered to start the process of measuring the resistance of the atomizer.

The resistance value of the atomizer is read at intervals of first preset time to obtain a plurality of first resistance values, and a fluctuation range of the obtained plurality of first resistance values is determined. If the fluctuation range of the plurality of first resistance values is within the preset fluctuation range, it indicates that the atomizer is connected normally.

After it is determined that the atomizer is in a normal state, the atomizer is started to operate normally for second preset time, and then the resistance value of the atomizer is read. If the resistance value of the atomizer is within the preset resistance value range in this case, it indicates that the TCR of the atomizer is normal. If the resistance value of the atomizer is not within the preset resistance value range, it indicates that the TCR may exceed the range, or the atomization liquid is in a condition such as being insufficient, dry burning, and so on, the atomizer gives an alarm and exits the currently identified state.

After it is determined that the TCR of the atomizer is normal, the resistance value of the atomizer is read at intervals of third preset time to obtain a second preset number of second resistance values (it may be understood that the third preset time may be the same as the first preset time, and the second preset number may also be the same as the first preset number), and then the average value of the second resistance values is calculated and compared to the average value of the first resistance values. If the difference between the two average values is within the preset difference range, the average value of the second resistance values and the average value of the first resistance values are then averaged as a measurement result. That is to say, all of the first resistance values and the second resistance values are averaged to obtain the initial resistance value of the atomizer.

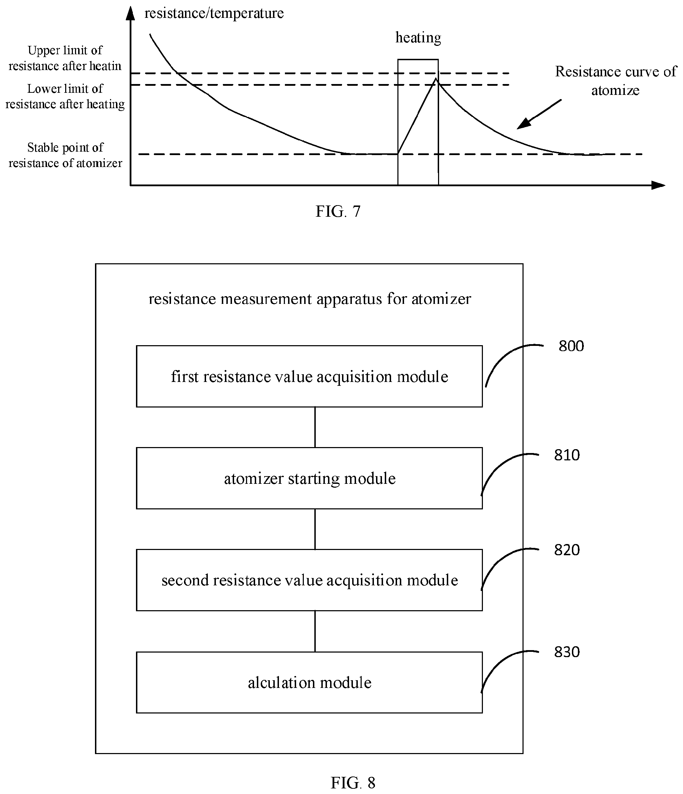

After the initial resistance value of the atomizer is obtained, the current ambient temperature is acquired as the initial temperature, the parameters in the TCR are calibrated according to the initial resistance value and the initial temperature. After the calibration is completed, the atomizer can be used normally. The resistance value of the atomizer through the above process as shown in FIG. 7, when the atomizer is connected, reaches the maximum and then gradually decreases. During the second preset time for which the atomizer is started to operate normally, the resistance value of the atomizer increases (that is, a heating section in the figure), and the normal operation of the atomizer ends (the heating ends). Under a normal circumstance, the resistance value of the atomizer decreases again. Therefore, in the present application, the first resistance values and the second resistance values are acquired a plurality of times before and after the heating, and then the average value of the first resistance values and the second resistance values is obtained, so that the resistance value more approximate to the real resistance value of the atomizer can be obtained as the initial resistance value.

TCR = dR/R*dT = (Rᵢ - R₀) / R₀ * (Tᵢ-T₀), where R_{L} represents the current resistance value of the atomizer, R₀ represents an initial resistance value of the atomizer, T_{L} represents the current temperature of the electronic atomization device, and T₀ represents the initial temperature of the atomizer. During the normal use, the current resistance value Rᵢ of the atomizer can be read, and the current temperature Tᵢ of the atomizer can be calculated according to the known R₀, T₀, and TCR, which is convenient for temperature control of the electronic atomization device.

It should be appreciated that, although the steps are displayed sequentially according to the instructions of the arrows in the flow charts of the embodiments, these steps are not definitely performed sequentially according to the order instructed by the arrows. Unless otherwise explicitly specified in this application, execution of the steps is not strictly limited, and the steps may be performed in other orders. Moreover, at least some of the steps in each embodiment may include a plurality of steps or a plurality of stages. The steps or stages are not definitely performed at the same moment but may be performed at different moments. Execution of the steps or stages is not definitely sequentially performed, but may be performed in turns or alternately with other steps or at least some of steps or stages of other steps.

Based on the same inventive concept, in an embodiment of the present application, a resistance measurement apparatus for an atomizer for implementing the above-mentioned resistance measurement method for the atomizer is further provided. The implementation solution provided by the apparatus to solve the problem is similar to the implementation solution described in the above method. Therefore, as for the specific limitations in one or more embodiments of the resistance measurement apparatus for the atomizer provided below, reference can be made to the limitations of the resistance measurement method for the atomizer above, which are not be repeated here.

In an embodiment, as shown in FIG. 8, a resistance measurement apparatus for an atomizer is provided, including:
a first resistance value acquisition module 800, configured to read a resistance value of the atomizer at intervals of first preset time, and obtain a first preset number of first resistance values;
an atomizer starting module 810, configured to start the atomizer and continue for second preset time;
a second resistance value acquisition module 820, configured to read the resistance value of the atomizer at intervals of third preset time, and obtain a second preset number of second resistance values; and
a calculation module 830, configured to calculate an average value of the first resistance values and the second resistance values as an initial resistance value of the atomizer.

In an embodiment, the resistance measurement apparatus for the atomizer further includes:
a first determination module (not shown in the figures), configured to determine a fluctuation range of the first resistance values;
the atomizer starting module 810, further configured to start the atomizer and continue for second preset time when the fluctuation range of the first resistance value is within a preset fluctuation range: and
a first alarm module (not shown in the figures), configured to determine a state of the atomizer as abnormal when the fluctuation range of the first resistance value is not within the preset fluctuation range, and generate corresponding alarm information.

In an embodiment, the first determination module is further configured to:
calculate a difference value between adjacent first resistance values, and obtain a plurality of difference values; and
calculate the fluctuation range of the first resistance values according to the plurality of difference values.

In an embodiment, the resistance measurement apparatus for the atomizer further includes:
a third resistance value acquisition module (not shown in the figures), configured to read the resistance value of the atomizer and obtain a third resistance value; and
the second resistance value acquisition module 820, further configured to, when the third resistance value is within the preset resistance range, read the resistance value of the atomizer at intervals of third preset time, and obtain a second preset number of second resistance values; and
a second alarm module (not shown in the figures), configured to generate corresponding alarm information when the third resistance is not within the preset resistance range. The second alarm module and the first alarm module may be the same module or different modules.

In an embodiment, the resistance measurement apparatus for the atomizer may further include:
a second determination module (not shown in the figures), configured to determine an average value of the first resistance values and an average value of the second resistance values; and
the calculation module 830, further configured to, when a difference value between the average value of the first resistance values and the average value of the second resistance values is within a preset difference range, calculate an average value of the first resistance values and the second resistance values as the initial resistance value of the atomizer; and
a third alarm module (not shown in the figures), configured to generate corresponding alarm information when the difference value between the average value of the first resistance values and the average value of the second resistance values is not within the preset difference range. The third alarm module and the first alarm module may be the same module or different modules.

In an embodiment, the resistance measurement apparatus for the atomizer may further include:
a level detection module (not shown in the figures), configured to detect a port level of a processor in an electronic atomization device to which the atomizer is connected; and
the first resistance value acquisition module 800, further configured to, when the port level of the processor is detected to drop, read a resistance value of the atomizer at intervals of first preset time, and obtain a first preset number of first resistance values.

In an embodiment, the resistance measurement apparatus for the atomizer may further include:
an ambient temperature acquisition module, configured to acquire a current ambient temperature through an ambient temperature sensor; and
a calibration module, configured to calibrate a temperature parameter in a reference temperature resistance parameter of the atomizer as the current ambient temperature.

The modules in the resistance measurement apparatus for the atomizer may be implemented entirely or partially by software, hardware, or a combination thereof. The foregoing modules may be built in or independent of a processor of a computer device in a hardware form, or may be stored in a memory of the computer device in a software form, so that the processor invokes and performs an operation corresponding to each of the foregoing modules.

In an embodiment, an electronic atomization device is provided, which includes a processor and a memory for storing a computer program. The processor, when executing the computer program, implements the steps of the resistance measurement method for the atomizer of any of the foregoing embodiments.

In an embodiment, a computer-readable storage medium is provided, on which a computer program is stored. The computer program, when executed by the processor, causes the processor to implement the steps of the resistance measurement method for the atomizer of any of the foregoing embodiments.

A person of ordinary skill in the art may understand that all or some of procedures of the method in the foregoing embodiments may be implemented by a computer program instructing relevant hardware. The computer program may be stored in a non-transitory computer-readable storage medium. When the computer program is executed, the procedures of the foregoing method embodiments may be implemented. Any reference to a memory, a database, or another medium used in the embodiments provided in this application may include at least one of a non-transitory memory and a transitory memory. The non-transitory memory may include a read-only memory (ROM), a magnetic tape, a floppy disk, a flash memory, an optical memory, a high density embedded non-volatile memory, a resistive memory (ReRAM), a magnetoresistive random access memory (MRAM), a magnetoresistive random access memory (FRAM), a phase change memory (PCM), a graphene memory, and the like. The non-transitory memory may include a random access memory (RAM) or an external cache memory. For the purpose of description instead of limitation, the RAM is available in a plurality of forms, such as a static random access memory (SRAM), a dynamic random access memory (DRAM), or the like. The databases involved in the embodiments provided in this application may include at least one of a relational database and a non-relational database. The non-relational database may include a distributed database based on a block chain, and so on, which is not limited thereto. The processor involved in the embodiments provided in this application may be a general purpose processor, a central processing unit, a graphics processing unit, a digital signal processor, a programmable logic device, a data processing logic device based on quantum computing, and the like, which is not limited thereto.

Technical features of the foregoing embodiments may be randomly combined. To make description concise, all possible combinations of the technical features in the foregoing embodiments are not described. However, the combinations of these technical features shall be considered as falling within the scope of the specification provided that no conflict exists.

The foregoing embodiments show only several implementation modes of this application and are described in detail, which, however, are not to be construed as a limitation to the patent scope of this application. Therefore, the protection scope of this application shall be subject to the appended claims.

## Claims

1. A resistance measurement method for an atomizer, comprising reading a resistance value of the atomizer at intervals of first preset time, obtaining a first preset number of first resistance values; **characterized by**
starting the atomizer and continuing for second preset time;
stopping the atomizer before reading for the second time the resistance value, reading the resistance value of the atomizer at intervals of third preset time, obtaining a second preset number of second resistance values; and
calculating an average value of the first resistance values and the second resistance values as an initial resistance value of the atomizer.

2. The method according to claim 1, further comprising:
before starting the atomizer and continuing for the second preset time,
determining a fluctuation range of the first resistance values; and
when the fluctuation range of the first resistance values is within a preset fluctuation range, starting the atomizer and continuing for the second preset time; and
when the fluctuation range of the first resistance values is not within the preset fluctuation range, determining a state of the atomizer as abnormal and generating corresponding alarm information.

3. The method according to claim 2, wherein determining the fluctuation range of the first resistance values comprises:
calculating a difference value between adjacent first resistance values, obtaining a plurality of difference values; and
calculating the fluctuation range of the first resistance values according to the plurality of difference values.

4. The method according to claim 1, further comprising:
after starting the atomizer and continuing for the second preset time and before reading the resistance value of the atomizer at intervals of third preset time and obtaining the second preset number of second resistance values,
reading the resistance value of the atomizer and obtaining a third resistance value; and
when the third resistance value is within a preset resistance range, reading the resistance value of the atomizer at intervals of third preset time, and obtaining the second preset number of second resistance values; and
generating corresponding alarm information when the third resistance value is not within the preset resistance range.

5. The method according to claim 1, further comprising:
before calculating the average value of the first resistance values and the second resistance values as the initial resistance value of the atomizer,
determining an average value of the first resistance values and an average value of the second resistance values; and
when a difference value between the average value of the first resistance values and the average value of the second resistance values is within a preset difference range, calculating the average value of the first resistance values and the second resistance values as the initial resistance value of the atomizer; and
generating corresponding alarm information when the difference value between the average value of the first resistance values and the average value of the second resistance values is not within the preset difference range.

6. The method according to claim 1, further comprising:
before reading the resistance value of the atomizer at intervals of the first preset time and obtaining the first preset number of first resistance values,
detecting a port level of a processor in an electronic atomization device to which the atomizer is connected; and
when the port level of the processor is detected to drop, reading the resistance value of the atomizer at intervals of the first preset time and obtaining the first preset number of first resistance values.

7. The method according to any one of claims 1 to 6, further comprising:
acquiring a current ambient temperature through an ambient temperature sensor; and
calibrating a temperature parameter in a reference temperature resistance parameter of the atomizer as the current ambient temperature.

8. A resistance measurement apparatus for an atomizer, comprising
a first resistance value acquisition module (800), configured to read a resistance value of the atomizer at intervals of first preset time and obtain a first preset number of first resistance values; **characterized by**
an atomizer starting module (810), configured to start the atomizer and continue for second preset time and stop the atomizer before reading for the second time the resistance value,;
a second resistance value acquisition module (820), configured to read the resistance value of the atomizer at intervals of third preset time and obtain a second preset number of second resistance values; and
a calculation module (830), configured to calculate an average value of the first resistance values and the second resistance values as an initial resistance value of the atomizer.

9. An electronic atomization device, comprising a processor and a memory for storing a computer program, wherein when the processor executes the computer program, the steps of the method of any one of claims 1 to 7 are implemented.

10. A computer-readable storage medium, on which a computer program is stored, wherein the computer program, when executed by a processor, the steps of the method according to any one of claims 1 to 7 are implemented.

## Patentansprüche

1. Widerstandsmessverfahren für einem Zerstäuber, aufweisend:
Lesen eines Widerstandswerts des Zerstäubers in Intervallen einer ersten vorgegebenen Zeitdauer und Erhalten einer ersten vorgegebenen Anzahl erster Widerstandswerte;
**gekennzeichnet durch**
Starten des Zerstäubers und Weiterlaufenlassen für eine zweite vorgegebene Zeitdauer;
Stoppen des Zerstäubers vor einem zweiten Lesen des Widerstandswerts, Lesen des Widerstandswerts des Zerstäubers in Intervallen einer dritten vorgegebenen Zeitdauer und Erhalten einer zweiten vorgegebenen Anzahl zweiter Widerstandswerte; und
Berechnen eines Durchschnittswerts der ersten Widerstandswerte und der zweiten Widerstandswerte als einen Anfangswiderstandswert des Zerstäubers.

2. Verfahren nach Anspruch 1, ferner aufweisend:
vor dem Starten des Zerstäubers und dem Weiterlaufenlassen für die zweite vorgegebene Zeitdauer:
Bestimmen eines Schwankungsbereichs der ersten Widerstandswerte; und
wenn der Schwankungsbereich der ersten Widerstandswerte innerhalb eines vorgegebenen Schwankungsbereichs liegt, Starten des Zerstäubers und Weiterlaufenlassen für die zweite vorgegebene Zeitdauer; und
wenn der Schwankungsbereich der ersten Widerstandswerte nicht innerhalb des vorgegebenen Schwankungsbereichs liegt, Bestimmen eines Zustands des Zerstäubers als abnormal und Erzeugen entsprechender Warninformation.

3. Verfahren nach Anspruch 2, wobei das Bestimmen des Schwankungsbereichs der ersten Widerstandswerte aufweist:
Berechnen eines Differenzwerts zwischen benachbarten ersten Widerstandswerten und Erhalten einer Vielzahl von Differenzwerten; und
Berechnen des Schwankungsbereichs der ersten Widerstandswerte gemäß der Vielzahl von Differenzwerten.

4. Verfahren nach Anspruch 1, ferner aufweisend:
nach dem Starten des Zerstäubers und dem Weiterlaufenlassen für die zweite vorgegebene Zeitdauer und vor dem Lesen des Widerstandswerts des Zerstäubers in Intervallen der dritten vorgegebenen Zeitdauer und dem Erhalten der zweiten vorgegebenen Anzahl zweiter Widerstandswerte:
Lesen des Widerstandswerts des Zerstäubers und Erhalten eines dritten Widerstandswerts; und
wenn der dritte Widerstandswert innerhalb eines vorgegebenen Widerstandsbereichs liegt, Lesen des Widerstandswerts des Zerstäubers in Intervallen der dritten vorgegebenen Zeitdauer und Erhalten der zweiten vorgegebenen Anzahl zweiter Widerstandswerte; und
Erzeugen entsprechender Warninformation, wenn der dritte Widerstandswert nicht innerhalb des vorgegebenen Widerstandsbereichs liegt.

5. Verfahren nach Anspruch 1, ferner aufweisend:
vor dem Berechnen des Durchschnittswerts der ersten Widerstandswerte und der zweiten Widerstandswerte als den Anfangswiderstandswert des Zerstäubers:
Bestimmen eines Durchschnittswerts der ersten Widerstandswerte und eines Durchschnittswerts der zweiten Widerstandswerte; und,
wenn ein Differenzwert zwischen dem Durchschnittswert der ersten Widerstandswerte und dem Durchschnittswert der zweiten Widerstandswerte innerhalb eines vorgegebenen Differenzbereichs liegt, Berechnen des Durchschnittswerts der ersten Widerstandswerte und der zweiten Widerstandswerte als den Anfangswiderstandswert des Zerstäubers; und
Erzeugen entsprechender Warninformation, wenn der Differenzwert zwischen dem Durchschnittswert der ersten Widerstandswerte und dem Durchschnittswert der zweiten Widerstandswerte nicht innerhalb des vorgegebenen Differenzbereichs liegt.

6. Verfahren nach Anspruch 1, ferner aufweisend:
vor dem Lesen des Widerstandswerts des Zerstäubers in Intervallen der ersten vorgegebenen Zeitdauer und dem Erhalten der ersten vorgegebenen Anzahl erster Widerstandswerte:
Erfassen eines Portpegels eines Prozessors in einer elektronischen Zerstäubungsvorrichtung, mit dem der Zerstäuber verbunden ist; und
wenn erfasst wird, dass der Portpegel des Prozessors abfällt, Lesen des Widerstandswerts des Zerstäubers in Intervallen der ersten vorgegebenen Zeitdauer und Erhalten der ersten vorgegebenen Anzahl erster Widerstandswerte.

7. Verfahren nach einem der Ansprüche 1 bis 6, ferner aufweisend:
Erfassen einer aktuellen Umgebungstemperatur mittels eines Umgebungstemperatursensors; und
Kalibrieren eines Temperaturparameters in einem Referenztemperatur-Widerstandsparameter des Zerstäubers auf die aktuelle Umgebungstemperatur.

8. Widerstandsmessvorrichtung für einen Zerstäuber, aufweisend:
ein erstes Widerstandswerterfassungsmodul (800), das dafür konfiguriert ist, einen Widerstandswert des Zerstäubers in Intervallen einer ersten vorgegebenen Zeitdauer zu lesen und eine erste vorgegebene Anzahl erster Widerstandswerte zu erhalten,
**gekennzeichnet durch**
ein Zerstäuberstartmodul (810), das dafür konfiguriert ist, den Zerstäuber zu starten und für eine zweite vorgegebene Zeitdauer weiterlaufen zu lassen und den Zerstäuber vor einem zweiten Lesen des Widerstandswerts zu stoppen;
ein zweites Widerstandswerterfassungsmodul (820), das dafür konfiguriert ist, den Widerstandswert des Zerstäubers in Intervallen einer dritten vorgegebenen Zeitdauer zu lesen und eine zweite vorgegebene Anzahl zweiter Widerstandswerte zu erhalten; und
ein Rechenmodul (830), das dafür konfiguriert ist, einen Durchschnittswert der ersten Widerstandswerte und der zweiten Widerstandswerte als einen Anfangswiderstandswert des Zerstäubers zu berechnen.

9. Elektronische Zerstäubungsvorrichtung, aufweisend einen Prozessor und einen Speicher zum Speichern eines Computerprogramms, wobei, wenn der Prozessor das Computerprogramm ausführt, die Schritte des Verfahrens nach einem der Ansprüche 1 bis 7 ausgeführt werden.

10. Computerlesbares Speichermedium, auf dem ein Computerprogramm gespeichert ist, wobei das Computerprogramm, wenn es durch einen Prozessor ausgeführt wird, die Schritte des Verfahrens nach einem der Ansprüche 1 bis 7 ausführt.

## Revendications

1. Procédé de mesure de résistance pour un atomiseur, le procédé comprenant :
la lecture d'une valeur de résistance de l'atomiseur à des intervalles d'un premier temps prédéfini, l'obtention d'un premier nombre prédéfini de premières valeurs de résistance ; **caractérisé par**
le démarrage de l'atomiseur et la poursuite pendant un deuxième temps prédéfini ;
l'arrêt de l'atomiseur avant la lecture pour la seconde fois de la valeur de résistance, la lecture de la valeur de résistance de l'atomiseur à des intervalles d'un troisième temps prédéfini, l'obtention d'un deuxième nombre prédéfini de deuxièmes valeurs de résistance ; et
le calcul d'une valeur moyenne des premières valeurs de résistance et des deuxièmes valeurs de résistance comme valeur de résistance initiale de l'atomiseur.

2. Procédé selon la revendication 1, comprenant en outre :
avant de démarrer l'atomiseur et de poursuivre pendant le deuxième temps prédéfini :
la détermination d'une plage de fluctuation des premières valeurs de résistance, et
lorsque la plage de fluctuation des premières valeurs de résistance est comprise dans une plage de fluctuation prédéfinie, le démarrage de l'atomiseur et la poursuite pendant le deuxième temps prédéfini ; et
lorsque la plage de fluctuation des premières valeurs de résistance n'est pas comprise dans la plage de fluctuation prédéfinie, la détermination d'un état de l'atomiseur comme anormal et la génération d'informations d'alarme correspondantes.

3. Procédé selon la revendication 2, dans lequel la détermination de la plage de fluctuation des premières valeurs de résistance comprend :
le calcul d'une valeur de différence entre des premières valeurs de résistance, l'obtention d'une pluralité de valeurs de différence ; et
le calcul de la plage de fluctuation des premières valeurs de résistance en fonction de la pluralité de valeurs de différence.

4. Procédé selon la revendication 1, comprenant en outre :
après avoir démarré l'atomiseur et poursuivi pendant le deuxième temps prédéfini et avant d'avoir lu la valeur de résistance de l'atomiseur à des intervalles du troisième temps prédéfini et obtenu le deuxième nombre prédéfini de deuxièmes valeurs de résistance,
la lecture de la valeur de résistance de l'atomiseur et l'obtention d'une troisième valeur de résistance ; et
lorsque la troisième valeur de résistance est comprise dans une plage de résistance prédéfinie, la lecture de la valeur de résistance de l'atomiseur à des intervalles du troisième temps prédéfini, et l'obtention du deuxième nombre prédéfini de deuxièmes valeurs de résistance, et
la génération d'informations d'alarme correspondantes lorsque la troisième valeur de résistance n'est pas comprise dans la plage de résistance prédéfinie.

5. Procédé selon la revendication 1, comprenant en outre :
avant de calculer la valeur moyenne des premières valeurs de résistance et des deuxièmes valeurs de résistance comme valeur de résistance initiale de l'atomiseur :
la détermination d'une valeur moyenne des premières valeurs de résistance et d'une valeur moyenne des deuxièmes valeurs de résistance ;
lorsqu'une valeur de différence entre la valeur moyenne des premières valeurs de résistance et la valeur moyenne des deuxièmes valeurs de résistance est comprise dans une plage de différence prédéfinie, le calcul de la valeur moyenne des premières valeurs de résistance et des deuxièmes valeurs de résistance comme valeur de résistance initiale de l'atomiseur ; et
la génération d'informations d'alarme correspondantes lorsque la valeur de différence entre la valeur moyenne des premières valeurs de résistance et la valeur moyenne des deuxièmes valeurs de résistance n'est pas comprise dans la plage de différence prédéfinie.

6. Procédé selon l'une quelconque des revendications 1 à 5, comprenant en outre :
avant de lire la valeur de résistance de l'atomiseur à des intervalles du premier temps prédéfini et d'obtenir le premier nombre prédéfini de premières valeurs de résistance,
la détection d'un niveau de port d'un processeur dans un dispositif d'atomisation électronique auquel l'atomiseur est connecté, et
lorsque le niveau de port du processeur est détecté comme étant en baisse, la lecture de la valeur de résistance de l'atomiseur à des intervalles du premier temps prédéfini et l'obtention du premier nombre prédéfini de premières valeurs de résistance.

7. Procédé selon l'une quelconque des revendications 1 à 6, comprenant en outre :
l'acquisition d'un paramètre de température ambiante actuelle au moyen d'un capteur de température ambiante ; et
la calibration d'un paramètre de température dans un paramètre de résistance thermique de référence de l'atomiseur, en fonction la température ambiante actuelle.

8. Appareil de mesure de résistance pour un atomiseur, comprenant :
un module d'acquisition d'une première valeur de résistance (800), configuré pour lire une valeur de résistance de l'atomiseur à des intervalles d'un premier temps prédéfini et obtenir un premier nombre prédéfini de premières valeurs de résistance ; **caractérisé par**
un module de démarrage de l'atomiseur (810), configuré pour démarrer l'atomiseur et poursuivre pendant un deuxième temps prédéfini, et arrêter l'atomiseur avant de lire la valeur de la résistance pour la deuxième fois ;
un module d'acquisition d'une deuxième valeur de résistance (820), configuré pour lire la valeur de résistance de l'atomiseur à des intervalles d'un troisième temps prédéfini et obtenir un deuxième nombre prédéfini de deuxièmes valeurs de résistance ; et
un module de calcul (830), configuré pour calculer une valeur moyenne des premières valeurs de résistance et des deuxièmes valeurs de résistance comme valeur de résistance initiale de l'atomiseur.

9. Dispositif d'atomisation électronique, comprenant un processeur et une mémoire pour stocker un programme informatique, dans lequel, lorsque le processeur exécute le programme informatique, les étapes du procédé selon l'une quelconque des revendications 1 à 7 sont mises en œuvre.

10. Support de stockage lisible par ordinateur sur lequel est stocké un programme informatique qui, lorsqu'il est exécuté par un processeur, met en œuvre les étapes du procédé selon l'une quelconque des revendications 1 à 7.
